# EUROPÄISCHE PATENTANMELDUNG

(11) **EP 4 711 951 A1**
(43) Veröffentlichungstag der Anmeldung: **18.03.2026**
(21) Anmeldenummer: 25197907.6
(22) Anmeldetag: 25.08.2025
(51) Int. Cl.: G06F 16/334, G06F 21/62

(54) **VERFAHREN ZUM DURCHSUCHEN VON VERTRAULICHEN INFORMATIONSOBJEKTEN**

(30) Priorität: 13.09.2024 DE 102024126482
(71) Anmelder: secunet Security Networks Aktiengesellschaft, 45138 Essen (DE)
(72) Erfinder: Amrhein, Susanne, M.Sc., 80339 München (DE); Krüger, Maximilian, Dr. rer. nat., 44787 Bochum (DE); Reuter, Stefan, 57482 Wenden (DE); Kemmel, Falk, Dipl. Inform., 01445 Radebeul (DE)
(74) Vertreter: Andrejewski - Honke Patent- und Rechtsanwälte Partnerschaft mbB

(57) **Zusammenfassung**

Bei einem Verfahren zum Durchsuchen von vertraulichen Informationsobjekten (5) umfasst eine elektronische Plattform (1) eine Recheneinheit (2) und eine Datenbank (3). Die Nutzung der Plattform (1) erfordert eine Zugangsberechtigung für Nutzer (4), wobei die Plattform (1) Zugriff auf eine Vielzahl an Informationsobjekten (5) besitzt bzw. den Nutzern (4) ermöglicht. Eine Suchanfrage (7) eines suchenden Nutzers (4, 21) wird an die Recheneinheit (2) übermittelt und löst einen Suchvorgang in der Datenbank (3) aus. Die Informationsobjekte (5) umfassen Inhaltsdaten (17) und Metadaten (8). Wenigstens ein Teil der und vorzugsweise alle Inhaltsdaten (17) eines Informationsobjekts (5) werden durch Text-, Audio- und/oder Video-Einbettung vektorisiert und als Vektor (9) in der Datenbank (3) gespeichert.

## Beschreibung

Die Erfindung betrifft ein Verfahren zum Durchsuchen von vertraulichen Informationsobjekten, wobei eine elektronische Plattform eine Recheneinheit und eine Datenbank umfasst, wobei die Nutzung der Plattform eine Zugangsberechtigung für Nutzer erfordert, wobei die Plattform Zugriff auf eine Vielzahl an Informationsobjekten besitzt bzw. den Nutzern ermöglicht, wobei eine Suchanfrage eines suchenden Nutzers an die Recheneinheit übermittelt wird und einen Suchvorgang in der Datenbank auslöst, wobei die Informationsobjekte Inhaltsdaten und Metadaten umfassen. Die Erfindung betrifft ferner ein Computerprogramm und eine Plattform zum Durchsuchen von vertraulichen Informationsobjekten sowie jeweils eine Verwendung hiervon.

Ein Verfahren zum Durchsuchen von Informationsobjekten in einer Datenbank ist beispielsweise aus EP 2 210 198 B1 bekannt. In diesem Beispiel ist die Suchfunktion nur auf solche Nutzer beschränkt, welche eine Zugangsberechtigung - beispielsweise aufgrund eines zahlungspflichtigen Abonnements - besitzen. Diese Nutzer können ausnahmslos auf alle Dokumente bzw. Dateien bzw. Informationsobjekte zugreifen, die sie im Rahmen ihres Abonnements für einen Zugriff berechtigt. Eine grobe Individualisierung ist häufig insofern möglich, als dass der Nutzer eine ausgewählte Anzahl an Datenbankpaketen in Form von thematisch gruppierten Modulen seines Interesses erwerben kann. Im Einzelfall kann der Nutzer auch gegen ein entsprechend geringes Entgelt nur die Zugriffsberechtigung für ein einzelnes, bestimmtes Dokument/Informationsobjekt erwerben. Bei diesem dokumentspezifischen Zugriff werden dem Nutzer meist zwar der Titel und die Zusammenfassung des jeweiligen Dokuments vorab angezeigt, ohne aber einen Zugriff auf den Volltext zu erhalten.

In EP 2 210 198 B1 werden Informationsobjekte (vor allem juristische Texte) beschrieben, die neben den Inhaltsdaten (der bloße, jeweilige juristische Text) auch Metadaten ("associated document information") umfassen. Diese Metadaten können als "term vector" organisiert werden und beispielsweise eine Reihe von in den jeweiligen Inhaltsdaten häufig vorkommenden Stichwörtern umfassen. Diese häufig vorkommenden Stich- bzw. Schlagwörter sind daher eine Art "Schlagwortwolke", die die schnelle Priorisierung der Relevanz eines Dokuments/Informationsobjekts ermöglicht. Dies erleichtert die herkömmliche Stichwortsuche, weil beispielsweise die Suchanfrage zunächst nur mit dem jeweiligen "term vector" verglichen werden kann, was die Suchgeschwindigkeit erhöht und/oder eine genauere Einschätzung der Relevanz des jeweiligen Informationsobjekts hinsichtlich der Suchanfrage ermöglicht.

Nachteilig an den bekannten Verfahren ist, dass es insbesondere nicht auf Dokumentenmengen bzw. Dateimengen anwendbar ist, die zu einem guten Teil als vertraulich bzw. geheim eingestufte Dokumente/Informationsobjekte/Dateien umfassen. Denn die Vielzahl an vertraulichen, durchsuchbaren Informationsobjekten weckt das Interesse Dritter, worunter neben gewöhnlichen Kriminellen auch staatliche und parastaatliche Akteure fallen. Hierdurch werden starke Schutzmaßnahmen erforderlich, die letztlich die Suchabläufe erschweren. Eine wichtige Vertreterin dieser starken Schutzmaßnahmen ist das *Need-to-*know-Prinzip (auch: Erforderlichkeitsprinzip, "Kenntnis nur, wenn nötig", nachfolgend mit "NTK" abgekürzt), welches insbesondere auch die Suchabläufe in Datenbanken deutlich erschwert. Dies wird nachfolgend ein einem Beispiel verdeutlicht. Das Need-to-know-Prinzip (Kenntnis nur, wenn nötig), welches auch als Erforderlichkeitsprinzip bezeichnet wird, beschreibt ein Sicherheitsziel für geheime Informationen bzw. Vorgänge bzw. Dokumente bzw. Informationsobjekte bzw. Dateien.

Ein bestimmtes, beispielhaftes vertrauliches Dokument bzw. Informationsobjekt, beispielsweise ein Besprechungsprotokoll, wird von dem zuständigen Sachbearbeiter einer Behörde - etwa im Rahmen eines Vorgangs, bzw. eines Falls bzw. einer Akte - erstellt. Der zuständige Sachbearbeiter (Ersteller des Informationsobjekts) hat zweckmäßigerweise während der Dauer seiner Zuständigkeit zu diesem Vorgang, bzw. diesem Fall bzw. dieser Akte eine Zugriffsberechtigung auf dieses Dokument/Informationsobjekt.

Dieses beispielhafte, vertrauliche Dokument/Informationsobjekt soll für die meisten Nutzer - beispielsweise Mitarbeiter einer Behörde - aufgrund ihrer fehlenden Zuständigkeit niemals einsehbar sein. Gleichzeitig kann es einen weiteren Nutzer/Mitarbeiter/Mensch geben, der - neben dem zuständigen Sachbearbeiter - ein zufälliges, dienstliches Interesse an dem Dokument/Informationsobjekt hat. Dieses dienstliche Interesse kann zum Beispiel darin begründet sein, dass für die Bearbeitung eines ganz anderen Vorgangs/Falls die Kenntnis des Inhalts des Besprechungsprotokolls erforderlich ist. Diesem weiteren Nutzer ist im Rahmen des NTK-Prinzips die Zugriffsberechtigung zu dem beispielhaften vertraulichen Informationsobjekt zu gewähren. Bezogen auf dieses Informationsobjekt hat der weitere Mitarbeiter somit eine situationsabhängige Zugriffsberechtigung.

Ein Problem dabei besteht in der Größe der Einheiten bzw. Organisation bzw. Unternehmen bzw. Behörden, so dass der Ersteller des beispielhaften vertraulichen Informationsobjekts bzw. Informationsobjekts und der weitere Nutzer sich häufig nicht kennen. Aufgrund der Vertraulichkeit ist dem weiteren Nutzer die Existenz des Dokuments bzw. Informationsobjekts erst recht nicht bekannt. Unter der Prämisse der Schaffung eines digitalen Arbeitsumfelds ist der weitere Mitarbeiter bzw. der weitere Organisationsangehörige somit dazu gezwungen, einen Suchvorgang zur Auffindung von relevanten Informationsobjekten in einer Datenbank vorzunehmen.

Der Begriff "Behörde" meint bevorzugt eine öffentliche Stelle, die die Aufgaben der öffentlichen Verwaltung wahrnimmt, die ihr aufgrund materieller Gesetze aufgegeben sind. Behörden können Tun, Dulden oder Unterlassen aufgeben oder Leistungen darbieten und sind das Organ der jeweiligen Körperschaft, für die sie eingerichtet sind. Eine Behörde ist vorzugsweise eine staatliche Einrichtung, die gesetzlich vorgeschriebene Aufgaben der öffentlichen Verwaltung sowie Rechtspflege erfüllt, beispielsweise Polizeibehörde, Justizbehörde, Staatsanwaltschaft und/oder dergleichen.

Der Begriff "Behörde" dient bevorzugt als ein Beispiel bzw. Synonym für eine Organisation. Der Begriff "Organisation" steht vorzugsweise für ein über einen gewissen Zeitraum fest bestehendes, arbeitsteiliges System, in dem vorteilhafterweise Beteiligte und Maschinen bzw. Geräte bzw. Vorrichtungen zur Erfüllung der Organisationsaufgabe und zur Erreichung der Organisationsziele verbunden sind.

Probleme in der Praxis ergeben sich hauptsächlich im Bereich der situationsabhängigen Zugriffsberechtigung und damit vor allem bei der Abwägung von Suchinteresse einerseits und Geheimhaltungsinteresse andererseits. Die situationsabhängige Zugriffsberechtigung hängt v.a. von der Relevanz der Tätigkeit des suchenden Nutzers ab und von dem Bedeutungsgehalt der Informationen für diese Tätigkeit, die in dem konkreten Informationsobjekt enthalten sind. Die Zugriffsberechtigung kann unter Umständen auch von einer Nutzerrolle abhängen, die den Nutzern beispielsweise vom Auftrag-, Arbeit- und/oder Gesetzgeber zugewiesen wurde. Letztlich muss der Ersteller oder ein anderer dauerhaft Zuständiger bezüglich des beispielhaften Informationsobjekts eine Ermessensentscheidung treffen, ob der weitere bzw. suchende Nutzer einen Zugriff darauf erhalten soll.

Bei der Tätigkeit des suchenden/weiteren Nutzers kann es sich beispielsweise um eine geheimdienstliche Ermittlungstätigkeit handeln, die in die Zuständigkeit des suchenden/weiteren Nutzers fällt. Ist die Bedeutung des Sucherfolgs des suchenden/weiteren Nutzers groß, so kann dieses Suchinteresse das Geheimhaltungsinteresse sogar von Vorgängen/Akten mit höchstem Geheimhaltungsgrad überwiegen. Dann erteilt der zuständige Nutzer bzw. Vorgangs- bzw. Aktenverantwortliche dem suchenden Nutzer eine wie auch immer geartete Zugriffsberechtigung für den Vorgang bzw. die Akte bzw. ein bestimmtes Dokument/Informationsobjekt bzw. für einen Teil davon.

Es ist daher nicht zweckmäßig ein Suchsystem in der Datenbank einzurichten, welches den suchenden Nutzer im Falle von Akten mit einer bestimmten Geheimhaltungsstufe von vornherein ausschließt. Folglich soll die Datenbank in der Lage sein, Suchen über alle oder wenigstens sehr viele vertrauliche Informationsobjekte hinweg zuzulassen bzw. durchzuführen.

Der Einsatz der bekannten Datenbanken würde somit dazu führen, dass der suchende Nutzer von sehr vielen NTK-Informationsobjekten erführe, von denen er - vielleicht von einigen, wenigen relevanten Ausnahmen abgesehen - gar nichts erfahren dürfte. Der Erfindung liegt daher die Aufgabe zugrunde, ein Verfahren zum Durchsuchen von vertraulichen Informationsobjekten in einer Datenbank anzugeben, bei welchem die Sicherheit durch konsequente Beachtung des NTK-Prinzips gewährleistet und gleichzeitig ein möglichst effizienter Suchvorgang geboten wird. Diese Aufgabe wird gelöst durch ein Verfahren zum Durchsuchen von vertraulichen Informationsobjekten, wobei eine elektronische Plattform eine Recheneinheit und eine Datenbank umfasst, wobei die Nutzung der Plattform eine Zugangsberechtigung für Nutzer erfordert, wobei die Plattform Zugriff auf eine Vielzahl an Informationsobjekten besitzt bzw. den Nutzern ermöglicht, wobei eine Suchanfrage eines suchenden Nutzers an die Recheneinheit übermittelt wird und einen Suchvorgang in der Datenbank auslöst, wobei die Informationsobjekte Inhaltsdaten und Metadaten umfassen, dadurch gekennzeichnet, dass wenigstens ein Teil der und vorzugsweise alle Inhaltsdaten eines Informationsobjekts durch Text-, Bild-, Audio- und/oder Video-Einbettung von der Recheneinheit vektorisiert und als Vektor in der Datenbank gespeichert werden. Vorzugsweise werden mehrere Informationsobjekte jeweils vektorisiert und jeweils als Vektor in der Datenbank gespeichert.

Der Erfindung liegt zunächst die Erkenntnis zugrunde, dass bekannte Suchverfahren in Datenbanken wesentlich darauf beruhen, dass die Treffer einer Suchanfrage dem Nutzer praktisch sofort angezeigt werden können. In der Folge kann der Nutzer sofort die Treffermenge überprüfen und in einem zweiten Schritt gegebenenfalls die Suchanfrage verfeinern bzw. ändern. Je nach Suchvorgang kann es sich um fünf bis zehn aufeinanderfolgende und insbesondere aufeinander aufbauende Suchschritte handeln, bis die Treffermenge ausreichend präzise eingekreist wurde. Aufeinanderfolgende Suchschritte können auch als iterativer Prozess aufgefasst werden. "Iteration" beschreibt allgemein einen Prozess mehrfachen Wiederholens gleicher oder ähnlicher Handlungen zur Annäherung an eine Lösung oder ein bestimmtes Ziel. Dieses bestimmte Ziel beschreibt im Rahmen dieser Erfindung das Auffinden des gesuchten Vorgangs bzw. Dokuments bzw. Informationsobjektes.

Es wurde gefunden, dass dieses schrittweise Vorgehen bei NTK-Datenbanken nicht praktikabel ist. Zum einen befindet sich für den suchenden Nutzer ein Großteil der Informationsobjekte im NTK-Dunkelfeld. Zum anderen können Stunden, Tage oder sogar Wochen vergehen (etwa aufgrund Urlaub des zuständigen Nutzers und Krankheit des stellvertretenden Nutzers), bis dem suchenden Nutzer die Zugriffsberechtigung erteilt wurde. Dieser Umstand führt dazu, dass die bekannten Datenbanken für den suchenden Nutzer unter Beachtung des NTK-Prinzips nicht praktikabel sind. Dies gilt insbesondere auch für die Stichwortsuchen aus EP 2 210 198 B1.

Der Erfindung liegt ferner die Erkenntnis zugrunde, dass das schrittweise Herantasten auch den Kollegen des suchenden Nutzers unnötig viel Arbeit bereiten würde. Recht viele Informationsobjekte, darunter viele für den suchenden Nutzer wenig relevante Informationsobjekte, müssten vom suchenden Nutzer wenigstens oberflächlich durchgesehen und dann als wenig relevante Treffer verbucht werden müssen. Dies widerspricht jedoch dem NTK-Prinzip direkt, weswegen dieser Ansatz zu verwerfen ist. Alternativ müssten die jeweils zuständigen Personen bei allen Treffern der Suchanfrage und damit auch bei den wenig relevanten Treffern jeweils eine NTK-Überprüfung vornehmen, was in einem unverhältnismäßig großen Aufwand resultieren kann.

Es wurde gefunden, dass die Vektorisierung der Inhaltsdaten der Informationsobjekte durch Einbettung dazu führt, dass weit über Wortsuchen hinaus gehende Suchanfragen gestellt werden können, bei denen die Recheneinheit die satzartig formulierten Suchanfragen versteht und mit entsprechend präzisen Treffermengen oder sogar Rückfragen zur Präzisierung der Treffermengen antworten kann. Hierdurch werden genauere, weil kontextempfindlichere Suchvorgänge möglich, so dass die Zahl der Suchschritte verringert werden kann. Gleichzeitig wird durch die Speicherung der Vektoren in der Datenbank ein zentraler Suchraum geschaffen, so dass - die entsprechenden NTK-Freigaben vorausgesetzt - jeder Nutzer grundsätzlich Zugang zu allen Informationen erhalten kann. Es wird somit eine NTK-Datenbank ermöglicht, die die Zahl der erforderlichen NTK-Anfragen an die anderen Nutzer der Plattform verringert und gleichzeitig einen für alle Nutzer großen Informationspool bereitstellt. Im Ergebnis wird mit der erfindungsgemäßen Lehre die eingangs genannte Aufgabe gelöst.

Der Ausdruck "Plattform" meint vorzugsweise ein System mit mehreren Rechnern, wobei vorteilhafterweise die Plattform wenigstens einen Server umfasst. Die Plattform kann insbesondere durch eine Software definiert sein, so dass die Software den Server bzw. die Endgeräte bzw. Clients definiert. Die Plattform kann innerhalb einer Organisation bzw. einer Behörde bzw. eines Gebäudes befindlich sein. Der Ausdruck "Gebäude" meint bevorzugt wenigstens einen geschlossenen Raum einer Immobilie. Es ist möglich, dass die Plattform sich über mehrere Organisationen, mehrere Behörden und/oder mehrere Gebäude erstreckt. Ganz besonders vorzugsweise wird die Plattform bzw. werden die an der Plattform beteiligten Rechner/Clients/Server durch ein System von Zugangsberechtigungen gesichert. Es ist bevorzugt, dass nur Nutzer mit einem Nutzerkonto die Plattform nutzen können bzw. eine Zugangsberechtigung besitzen. Die Endgeräte /Clients können beispielswiese PCs, Tablets, Smartphones oder dergleichen sein.

Software kann als Sammelbegriff für Computerprogramme (Programme) und die zugehörigen Daten gesehen werden. Sie umfasst Anweisungen, die ein softwaregesteuertes Gerät ausführt und wie es diese ausführt. Die Hardware führt die Software aus und setzt somit die enthaltenen Anweisungen um. Der Ausdruck "Computerprogramm" meint in der Informatik vorzugsweise eine Darstellung eines Verfahrens in einer für einen Computer verständlichen Form. Programme werden zweckmäßigerweise in einer Programmiersprache formuliert. Vorteilhafterweise ist ein/das Computerprogramm (Programm) ein spezifischer Satz von geordneten Rechenoperationen, die ein Computer ausführen soll.

Ein Computerprogramm kann somit als eine Folge von Befehlen gesehen werden, die nach Aufnahme in einem maschinenlesbaren Träger fähig sind zu bewirken, dass eine Maschine mit informationsverarbeitenden Tätigkeiten eine bestimmte Funktion oder Aufgabe ein bestimmtes Ergebnis anzeigt, ausführt oder erzielt.

Der Begriff "Informationsobjekt" meint bevorzugt digital speicherbare Objekte und insbesondere Dateien jeder Art, beispielsweise Text-, Video-, Audio- und Bilddateien sowie verschiedenste Formate von Datenbankeinträgen.

Mit einem Geheimhaltungsgrad werden Verschlusssachen entsprechend ihrer Schutzbedürftigkeit bevorzugt von einer amtlichen Stelle oder auf deren Veranlassung eingestuft. Vorzugsweise wird jedes Objekt gemäß seiner Schutzwürdigkeit und Gefährdung einem Schutzgrad zugeordnet.

Verschlusssachen (kurz "VS" genannt) sind vorzugsweise im öffentlichen Interesse geheimhaltungsbedürftige Erkenntnisse, Gegenstände oder Tatsachen. Die Darstellungsform spielt dabei zweckmäßigerweise keine Rolle. Sowohl eine Fotokopie als auch eine technische Einrichtung oder das gesprochene Wort kann eine Verschlusssache darstellen. Die Einstufung wird mit Vorteil von einer Behörde je nach Geheimhaltungsbedürftigkeit eingestuft oder die Einstufung wird von ihr veranlasst.

Der Ausdruck "vertrauliche Informationsobjekte" meint vorzugsweise, dass nur Personen mit Zugangsberechtigung einen Zugriff auf die Informationsobjekte haben. Weiter vorzugsweise bedeutet "vertraulich", dass die Informationsobjekte einer dienstlichen bzw. amtlichen Geheimhaltungsstufe bzw. einem dienstlichen bzw. amtlichen Geheimhaltungsgrad unterworfen sind. Beispiele von Geheimhaltungsgraden sind - insbesondere für die Bundesrepublik Deutschland
- die folgenden Stufen:
   - Verschlusssache - Nur für den Dienstgebrauch (VS-NfD),
   - Verschlusssache - Vertraulich (VS-Vertraulich),
   - Geheim,
   - Streng geheim.

In der nachfolgenden Tabelle werden beispielhaft Geheimhaltungsgrade verglichen.

| Bundesrepublik Deutschland - BRD | STRENG GEHEIM | GEHEIM | VS-VERTRAULICH | VS-NUR FÜR DEN DIENSTGEBRAUCH |
|---|---|---|---|---|
| Europäische Union - EU | TRES SECRET UE/EU TOP SECRET | SECRET UE/EU SECRET | CONFIDENTIEL UE/EU CONFIDENTIAL | RESTREINT UE/EU RESTRICTED |
| NATO | COSMIC TOP SECRET | NATO SECRET | NATO CONFIDENTIAL | NATO RESTRICTED |
| ESA | ESA TOP SECRET | ESA SECRET | ESA CONFIDENTIAL | ESA RESTRICTED |
| OCCAR | OCCAR TOP SECRET | OCCAR SECRET | OCCAR CONFIDENTIAL | OCCAR RESTRICTED |
| Eurocorps | EUROCOPRS TOP SECRET | EUROCORPS SECRET | EUROCORPS CONFIDENTIAL | EUROCORPS RESTRICTED |

Die NATO (North Atlantic Treaty Organization / "Nordatlantikvertrags-Organisation") ist ein Verteidigungsbündnis von europäischen und nordamerikanischen Mitgliedstaaten.

Die ESA (European Space Agency / Europäische Weltraumorganisation) ist eine internationale Organisation europäischer Staaten für die Koordinierung und den Betrieb gemeinsamer Raumfahrtaktivitäten.

OCCAR (Organisation Conjointe de Coopération en matière d'Armement / Organisation for Joint Armament Co-operation / Organisation für Gemeinsame Rüstungskooperation) ist eine internationale Organisation, deren Kerngeschäft das lebenslange Management komplexer, kooperativer Rüstungsprogramme ist.

Das Eurocorps im französischen Straßburg ist ein multinationales, voll einsatzfähiges und autonomes Hauptquartier der Rahmennationen Deutschland, Frankreich, Belgien, Spanien, Luxemburg und Polen, das allen Mitgliedsstaaten der EU und den NATO-assoziierten Staaten offensteht.

Die Zugangsberechtigung kann vorzugsweise durch ein dienstliches bzw. arbeitsrechtliches Verhältnis begründet werden. Die Zugangsberechtigung wird bevorzugt durch wenigstens einen Authentifizierungsfaktor oder zwei Authentifizierungsfaktoren - insbesondere zwei Authentifizierungsfaktoren unterschiedlicher Kategorie (Besitz, Wissen, biometrische Eigenschaft) ausgedrückt.. Der Authentifizierungsfaktor "Wissen" umfasst vorzugsweise eine persönliche Identifikationsnummer (PIN). Der Authentifizierungsfaktor "Besitz" umfasst vorzugsweise einen elektronischen - insbesondere auslesbaren - Gegenstand beispielsweise einen Token, vorzugsweise eine Smartcard. Zweckmäßigerweise ist die Kenntnis des Geheimnisses der Zugangsberechtigung zwecklos, sofern der Rechner/Client/Server nicht von der Plattform umfasst ist. Es ist bevorzugt, dass eine Zugangsberechtigung gleichbedeutend ist mit einem Nutzerkonto auf der Plattform. Zweckmäßigerweise kann wenigstens eine Untermenge der Arbeitsdokumente im Volltext ausschließlich über die Nutzung der Plattform eingesehen werden.

Der technische Begriff Token bezeichnet bevorzugt alle eingesetzten Technologien gleichermaßen und hängt nicht von einer bestimmten Erscheinungsform der Hardware ab. Dazu gehören vorzugsweise alle Gegenstände, die Informationen zum Zweck der Identifikation und Authentifizierung speichern und übertragen können. Er umfasst somit passive Medien - beispielsweise Smartcards, USB-Token oder dergleichen - und aktive Medien - beispielsweise Mobiltelefone, Smartphones sowie USB-, NFC- und Bluetooth-Token nach dem offenen U2F-Standard oder dergleichen.

Ein Token, insbesondere ein Sicherheitstoken, kann somit als eine Hardwarekomponente - beispielsweise in Form einer Smartcard oder eines USB-Tokens oder einer microSD-Karte - zur Identifizierung und Authentifizierung von Nutzern/Personen ausgeführt sein. Token, insbesondere Sicherheitstoken, ist vorzugsweise Bestandteil eines Systems der Zugriffskontrolle mit Zwei-Faktor-Authentisierung. Ein Token in Form einer Smartcard ist eine Chipkarte, welche oft auch als Schlüsselkarte oder Integrated Circuit Card bezeichnet wird. Eine Smartcard ist eine spezielle Kunststoffkarte mit eingebautem integrierten Schaltkreis, welcher eine Hardware-Logik, nichtflüchtige EPROM bzw. EEPROM-Speicher und einen Mikroprozessor enthält. USB-Token können an einem USB-Port angeschlossen werden. Sie benötigen somit kein Kartenlesegerät, wie es für eine Smartcard erforderlich ist. Es können auch kontaktlose Token zum Einsatz kommen, sie werden auch als Transponder bezeichnet. Kontaktlose Token können auf RFID-Technologie basieren (englisch für "radio-frequency identification" / "Identifizierung mit Hilfe elektromagnetischer Wellen"). RFID bezeichnet eine Technologie für Sender-Empfänger-Systeme zum automatischen und berührungslosen Identifizieren von Objekten - hier kontaktlose Token - mit Radiowellen. Es ist denkbar gegen Missbrauch weitere Merkmale zur Authentifizierung heranzuziehen, möglich sind unter anderem die Kenntnis eines Passworts bzw. einer Persönlichen Identifikationsnummer (PIN) oder biometrische Merkmale des Nutzers/der Person. Sicherheitstoken können personalisiert sein, sie sind dann eindeutig einem bestimmten Nutzer bzw. einer bestimmten Person zugeordnet.

Für eine Smartcard-basierte Zwei-Faktor-Authentisierung beinhaltet ein SINA ID Token - entweder in Form einer Smartcard, eines USB-Tokens, einer microSD-Karte oder dergleichen - initiale Konfigurationsdaten und Sicherheitsbeziehungen für eine SINA Workstation. Er dient zudem als sicherer Speicher für kryptographische Schlüssel und Zertifikate.

Eine SINA Workstation umfasst bevorzugt eine Sicherheitsarchitektur und führt sogenannte Gastsysteme wie z. B. Windows oder Linux und deren Anwendungen in einer virtualisierten Umgebung aus. Dadurch werden Zugriffe auf Geräte und Schnittstellen, die ein Gastsystem erkennt, unter der Kontrolle des SINA Sicherheitsbetriebssystems ausgeführt. Alle Festplattenzugriffe und Netzwerkverbindungen werden so automatisch und ohne weitere manuelle Interaktion des Anwenders von SINA verschlüsselt.

Die Sichere Inter-Netzwerk Architektur (SINA) ist eine vom Bundesamt für Sicherheit in der Informationstechnik der Bundesrepublik Deutschland (BSI) in Zusammenarbeit mit der Firma secunet Security Networks AG entwickelte Produktfamilie zur Übertragung und Verarbeitung von schützenswerten Informationen in unsicheren Netzen.

Die Kommunikation zwischen SINA-Systemen basiert auf dem Sicherheitsprinzip eines Virtuellen Privaten Netzwerkes, kurz VPN. Dabei wird der gesamte Datenverkehr zwischen Standorten respektive bis zum individuellen Arbeitsplatz durchgehend kryptographisch entsprechend dem Standard IPsec geschützt. Die SINA-Komponenten selbst werden durch umfassende Mechanismen auf der Betriebssystem-Plattform (SINA-Linux) abgesichert.

SINA ist als Hochsicherheitslösung ausgelegt und entwickelt worden, daher sind diese VPN-Funktionen in ein speziell minimalisiertes und gehärtetes Linux-Betriebssystem (SINA Linux) eingebettet und durch besondere sicherheitsrelevante Zusatzfunktionen erweitert worden. Die kryptografischen Verfahren entsprechen dem aktuellen Standard IPsec.

Internet Protocol Security (IPsec) meint bevorzugt eine Erweiterung des Internet-Protokolls (IP) um Verschlüsselungs- und Authentifizierungsmechanismen. Damit erhält das Internet-Protokoll die Fähigkeit IP-Pakete kryptografisch gesichert über öffentliche und unsichere Netze zu transportieren. IPsec ermöglicht somit eine sichere Übertragung von Informationen in IP-basierten Datennetzwerken, wobei insbesondere die Vertraulichkeit, die Integrität und die Authentizität der mithilfe des IP-Protokolls übertragenen Informationen gewährleistet werden können.

Der Begriff "Vektor" meint vorzugsweise ein mehrdimensionales Datenobjekt und umfasst bevorzugt jeweils einen Parameter je Dimension. Es ist bevorzugt, dass wenigstens einer, vorzugsweise mehrere und weiter vorzugsweise alle der Parameter durch einen Zahlenwert abgebildet wird/werden. Der Vektor stellt mit Vorteil eine mathematische Abbildung des Informationsobjekts dar. Es ist bevorzugt, dass die Dimensionen jeweils wenigstens eine Ziffer und vorzugsweise lediglich Ziffern umfassen.

Der Ausdruck "Einbettung" meint bevorzugt den Vorgang einer mathematischen Abbildung des Informationsobjekts, wobei die mathematische Abbildung des Informationsobjekts zweckmäßigerweise in einem dazugehörigen Vektor resultiert. Die Einbettung kann eine Buchstaben-, Wort-, Satz-, Text-, Bild-, Audio-, und/oder Video-Einbettung sein, so dass Buchstaben, Wörter, Sätze, Text, Bilder, Audio- und/oder Videoobjekte von der Einbettung mathematisch abgebildet werden.

Es ist bevorzugt, dass eine Änderung eines Informationsobjekts durch einen Nutzer bzw. eine Speicherung des geänderten Informationsobjekts eine automatische Erzeugung eines geänderten Vektors bzw. eine automatische Änderung eines Vektors auslöst. Vorzugsweise ersetzt der geänderte Vektor einen älteren, nicht die Änderung umfassenden Vektor.

Gemäß einer sehr bevorzugten Ausführungsform vektorisiert die Plattform bzw. die Recheneinheit die Suchanfrage des Nutzers und wandelt die Suchanfrage in einen Anfragevektor um. Vorzugsweise wird der Anfragevektor mit dem Vektor aus der Datenbank abgeglichen. Zweckmäßigerweise ist die Datenbank eine Vektordatenbank. Mit Vorteil greift die Recheneinheit bzw. Datenbank bzw. Plattform während des Suchvorgangs bzw. des Abgleichens mit dem Anfragevektor auf wenigstens oder lediglich einen Teil der Datenbank bzw. den Vektor bzw. den Vektoren zu. Die Recheneinheit bzw. die Datenbank bzw. die Plattform ermittelt vorzugsweise ein Ähnlichkeitsmaß zwischen dem Anfragevektor und dem Vektor bzw. den Vektoren, wobei das Ähnlichkeitsmaß beispielsweise über die Kosinus-Ähnlichkeit und/oder den euklidischen Abstand bestimmt wird. Dies bewirkt, dass der Suchraum durchgängig vektoriell ausgebildet ist und insbesondere keine Suchräume über den Informationsobjekten hinweg gebildet werden müssen. Hierdurch wird sowohl die Suchgeschwindigkeit als auch die Sicherheit der Suchvorgänge erhöht. Denn die Vektorisierung ist zugleich auch eine Art Kodierung, die vorzugsweise ein Geheimnis der Recheneinheit bzw. künstlichen Intelligenz darstellt.

Es ist sehr vorteilhaft, dass die Recheneinheit bzw. die Plattform eine, insbesondere lernfähige, künstliche Intelligenz (KI) - insbesondere in Form eines neuronalen Netzes, insbesondere in Form eines künstlichen neuronalen Netzes (KNN) - umfasst. Dies erlaubt eine besonders kontextempfindliche Suche, so dass die Suchanfragen beispielsweise als Fragesätze formuliert werden können und die Suche oberhalb der Zeichenebene und damit in der Bedeutungsebene abläuft. Es ist bevorzugt, dass die Plattform bzw. die Recheneinheit bzw. die künstliche Intelligenz so ausgebildet ist, dass die Suchanfrage eine exakte Wortsuche und/oder eine kontextempfindliche Suche ermöglicht. Das neuronale Netz ist vorzugsweise als *Large Language Model* (LLM) ausgebildet. Das LLM bzw. das neuronale Netz kann beispielsweise ein autoregressives LLM, ein Encoder-Decoder LLM, ein transformerbasiertes LLM, und/oder ein multilinguales LLM sein bzw. umfassen.

Das neuronale Netz, insbesondere das künstliche neuronale Netz (KNN), ist vorteilhafterweise auf keine Architektur bzw. kein Architekturmodell beschränkt. Vereinfacht kann der Aufbau eines KNN wie folgt dargestellt werden: Ein Modell eines Neuronalen Netzes kann aus Knoten bestehen, sie können auch Neuronen genannt werden, welche Informationen von anderen Neuronen oder von außen aufnehmen können, modifizieren können und als Ergebnis wieder ausgeben können. Neuronale Netzwerke können aus Schichten von Knoten oder künstlichen Neuronen bestehen, beispielsweise einer Eingabeschicht, einer oder mehrerer verborgener Schichten sowie einer Output-Schicht. Jeder Knoten kann mit anderen Knoten verbunden sein und kann über eine bestimmte Gewichtung und einen Schwellenwert verfügen. Die künstliche Intelligenz wurde bzw. wird bzw. ist mithilfe einer Datenmenge trainiert. Die künstliche Intelligenz umfasst vorzugsweise ein Sprachmodell bzw. beruht mit Vorteil auf einem Sprachmodell. Mit Vorteil nimmt die Recheneinheit eine - insbesondere sprachliche bzw. zeichenkorrigierende - Vorverarbeitung der Suchanfrage vor, bei welcher zum Beispiel überflüssige Satzzeichen, Leerzeichen und/oder Sonderzeichen entfernt werden. Dies dient der effizienten Suche. Künstliche Intelligenz (KI), auch artifizielle Intelligenz, englisch *artificial intelligence* (AI), ist ein Teilgebiet der Informatik, das sich mit der Automatisierung intelligenten Verhaltens und dem maschinellen Lernen befasst.

Es ist sehr bevorzugt, dass der Vektor und das Informationsobjekt mithilfe eines Objektidentifikators einander zugeordnet bzw. miteinander verknüpft werden, wobei der Objektidentifikator vorzugsweise ein *University Unique Identifier* (UUID) ist. Dies bewirkt eine praktikable Verknüpfung zwischen dem Vektor und dem jeweiligen Informationsobjekt. Es ist sehr bevorzugt, dass der Objektidentifikator nicht Bestandteil der Inhaltsdaten und/oder der Metadaten ist. Zweckmäßigerweise umfasst der Vektor vektorisierte Inhaltsdaten und/oder vektorisierte Metadaten. Es ist bevorzugt, dass der Vektor mit dem Objektidentifikator verknüpft ist - vorzugsweise ohne den Vektor zu umfassen.

Mit Vorteil umfasst ein Informationsobjekt bzw. das dem Vektor zugeordnete Informationsobjekt nicht-vektorisierte Inhaltsdaten und/oder nicht-vektorisierte Metadaten. Vorzugsweise umfasst das Informationsobjekt den dazugehörigen, nicht-vektorisierten Objektidentifikator. Es ist möglich, dass das Informationsobjekt lediglich mit dem Objektidentifikator verknüpft ist ohne diesen zu umfassen. Vorteilhafterweise umfassen die Metadaten einen Geheimhaltungsgrad des Informationsobjekts und/oder einen Nutzeridentifikator und/oder ein Datum. Dies bewirkt eine Erhöhung der Sucheffizienz, weil auch die Informationen jenseits der Inhaltsdaten des Informationsobjekts durchsucht werden können. Es ist bevorzugt, dass die Metadaten - insbesondere gemeinsam mit den Inhaltsdaten - vektorisiert werden. Die Metadaten umfassen vorzugsweise eine Einstufungsnummer, eine Tagebuchnummer, und/oder konfigurierbare Felder für - beispielsweise - Schlagworte.

Es ist sehr bevorzugt, dass einem/dem Informationsobjekt wenigstens ein Vektor zugeordnet ist bzw. mehrere Vektoren zugeordnet sind. Vorzugsweise wird das Informationsobjekt bzw. eine Kopie des Informationsobjekts in mehrere Teile zerlegt, wobei mit Vorteil jeder Teil oder einige der Teile vektorisiert bzw. in einen Vektor umgewandelt werden. Die zerlegten Teile können beispielsweise Seiten, Absätze, Sätze und/oder Wörter eines Textdokuments sein. Die zerlegten Teile können so ausgebildet sein, dass Text und Bild voneinander separiert sind bzw. werden. Vorteilhafterweise zeigt ein/der Objektidentifikator des Informationsobjekts auf mehrere Vektoren, wobei die mehreren Vektoren vorzugsweise den zerlegten Teilen des Informationsobjekts entsprechen. Gemäß einer möglichen Ausführungsform existiert zu einem/dem Informationsobjekt lediglich ein Vektor, wobei vorteilhafterweise lediglich ein/der Objektidentifikator des Informationsobjekts auf den lediglich einen Vektor zeigt.

Es ist möglich, dass ein/der Vektor lediglich einem/dem Informationsobjekt oder mehreren Informationsobjekten zugeordnet ist. Der Vektor kann beispielsweise ein Wort, einen Satz oder ein Bild repräsentieren, welches/welcher in mehreren Informationsobjekten enthalten ist. Es ist möglich, dass (die) Objektidentifikatoren der mehreren Informationsobjekte auf den Vektor zeigen. Mit Vorteil umfasst die Plattform eine Zuordnungstabelle, welche die Zuordnungen der Vektoren zu den Objektidentifikatoren bzw. Informationsobjekten aufweist.

Es ist bevorzugt, dass die Datenbank und/oder die Recheneinheit und/oder ein/das Speichersystem im Vergleich zu anderen Funktionseinheiten der Plattform durch wenigstens einen weiteren Schutzmechanismus geschützt ist/sind. Dies bewirkt eine Erhöhung der Sicherheit des Systems bzw. der Plattform. Es ist ganz besonders bevorzugt, dass die Recheneinheit und/oder die Datenbank und/oder das Speichersystem in unterschiedlichen Hardwarekomponenten realisiert sind. Mit Vorteil sind die Recheneinheit und/oder die Datenbank und/oder das Speichersystem baulich und weiter vorzugsweise räumlich voneinander getrennt. Der weitere Schutzmechanismus kann eine kryptographische Maßnahme und/oder eine personelle Maßnahme darstellen. Eine personelle Maßnahme meint beispielsweise eine ausschließliche Zugangsberechtigung durch etwa einen Admin. Vorzugsweise ist das Informationsobjekt bzw. sind die Informationsobjekte in dem Speichersystem (jeweils) verschlüsselt gespeichert. Es ist bevorzugt, dass die Plattform das Informationsobjekt bzw. die Informationsobjekte in einem Speichervorgang zunächst auf einem/dem speicherbefehlgebenden Endgerät verschlüsselt und dann in dem Speichersystem verschlüsselt ablegt.

Der Ausdruck "kryptographische Maßnahmen" meint bevorzugt Methoden und Techniken zur Verschlüsselung von Informationen. Sie spielen eine zentrale Rolle in der Sicherheit digitaler Kommunikation und Daten. Durch die Anwendung von Mathematik und Informatik wird vorteilhafterweise sichergestellt, dass Informationen/Nachrichten bevorzugt geschützt übertragen und/oder vorzugsweise geschützt gespeichert werden können. Dabei geht es vorzugsweise nicht nur um die reine Geheimhaltung, sondern auch um die Authentifizierung von Sender und Empfänger sowie die Integrität der Daten. Kryptographische Maßnahmen werden bevorzugt angewendet, um Transaktionen und Kommunikation zu sichern, persönliche Informationen zu schützen, die Identität zu verifizieren, die Veränderung von Dokumenten zu verhindern und/oder Vertrauen zwischen Servern aufzubauen.

Es ist sehr bevorzugt, dass die Recheneinheit bzw. die Plattform bzw. die Datenbank eine auf der Suchanfrage beruhende Treffermenge von Treffern erstellt. Es ist vorteilhaft, dass der oder die Treffer ein aufgefundener Vektor bzw. aufgefundene Vektoren gemäß der Suchanfrage bzw. gemäß dem Anfragevektor ist/sind. Vorzugsweise gleicht die Plattform bzw. die Recheneinheit bzw. die Datenbank den Vektor bzw. die Vektoren der Treffermenge mit einer Zugriffsberechtigung des suchenden Nutzers ab. Dies bewirkt eine Gewährleistung des NTK-Prinzips. Es ist bevorzugt, dass die Plattform bzw. Recheneinheit dem suchenden Nutzer diejenigen Informationen bzw. denjenigen oder diejenigen Treffer aus der Treffermenge vorenthält, zu dem bzw. denen der suchenden Nutzer keine Zugriffsberechtigung besitzt. Vorzugsweise zeigt die Recheneinheit bzw. Plattform bzw. Datenbank dem suchenden Nutzer in Abhängigkeit von der Zugriffsberechtigung eine Ergebnismenge an.

Die Ergebnismenge stellt zweckmäßigerweise die aufgefundenen Vektoren bzw. die Objektidentifikatoren der aufgefundenen Vektoren der Treffermenge als Informationsobjekte dar, zu welchen der suchende Nutzer eine Zugriffsberechtigung besitzt. Mit Vorteil ist die Ergebnismenge in Form einer Liste von Treffern bzw. Informationsobjekten dargestellt, auf welche der suchende Nutzer bereits ohne eine NTK-Prüfung eine Zugriffsberechtigung besitzt. Es ist besonders bevorzugt, dass ein bezüglich der vorenthaltenen Informationen bzw. Treffer zugriffsberechtigter Nutzer (Zugriffsberechtigter) und/oder die Plattform eine Zugriffsentscheidung treffen muss, ob dem suchenden Nutzer der Zugriff auf einen, einige oder alle der vorenthaltenen Informationen bzw. Treffer der Treffermenge gewährt wird.

Vorzugsweise ist einigen und vorzugsweise allen Nutzern ein bzw. wenigstens ein bzw. lediglich ein Nutzerkonto zugeordnet ist. Mit Vorteil ist einigen oder allen der Nutzer bzw. Nutzerkonten ein Nutzeridentifikator zugeordnet. Vorzugsweise wird die Suchanfrage des suchenden Nutzers und/oder der Nutzeridentifikator des suchenden Nutzers - vorzugsweise gemeinsam - von dem Nutzerkonto bzw. einem Endgerät bzw. Client an eine Zentralstelle der Plattform übermittelt. Es ist bevorzugt, dass die Zentralstelle die Suchanfrage des suchenden Nutzers an die Recheneinheit weiterleitet. Mit Vorteil leitet die Zentralstelle den Nutzeridentifikator an die Recheneinheit und/oder die Datenbank weiter. Vorteilhafterweise wird der an die Zentralstelle übermittelte Nutzeridentifikator mit der Treffermenge abgeglichen und bestimmt, welche der Treffer der Treffermenge zur Bildung der Ergebnismenge herangezogen werden.

Gemäß einer sehr bevorzugten Ausführungsform ist nach der Speicherung des zu dem wenigstens einen Informationsobjekt gehörenden Vektors neben dem gespeicherten Vektor auch das Informationsobjekt wenigstens zeitweise parallel gespeichert, wobei das Informationsobjekt vorzugsweise in einem Speichersystem gespeichert ist. Vorteilhafterweise ist das Speichersystem ein anderes Gerät als die Datenbank, auf welcher der zu dem Informationsobjekt zugehörige Vektor gespeichert ist. Dies bewirkt eine Trennung von Informationsobjekten und Vektoren, was ein Erhöhung der Sicherheit zur Folge hat. Mit Vorteil ist das Speichersystem ein *Network Access Storage* (NAS). Es ist bevorzugt, dass das Speichersystem bzw. die Recheneinheit eine eigene Netzwerkadresse zwecks Unterscheidung zu anderen Netzwerkkomponenten umfasst. Es ist möglich, dass die Datenbank eine eigene Netzwerkadresse aufweist. Mit Vorteil ist die Datenbank virtualisiert ausgebildet. Es ist bevorzugt, dass die Datenbank in einem bzw. als Container bzw. in einer bzw. als Collection angeordnet, wobei der Container bzw. die Collection vorteilhafterweise über eine eigene Netzwerkadresse verfügt.

Ein/der Container bzw. eine/die Collection ist in der Informatik ein abstraktes Objekt, das Elemente des gleichen Typs speichert. Je nach Anforderungen werden dabei unterschiedliche Datenstrukturen verwendet, um einen Container bzw. eine Collection zu realisieren. Der Container bzw. die Collection kann ein Softwarepaket sein, das alle Elemente enthält, die zur Ausführung in beliebigen Umgebungen erforderlich sind. Der Container bzw. die Collection virtualisiert vorzugsweise ein Betriebssystem und lässt sich bevorzugt plattformunabhängig bzw. ausführen, ob in einem privaten Rechenzentrum, in der öffentlichen Cloud oder auf dem privaten Laptop eines Entwicklers/Nutzers.

Besonders vorzugsweise umfasst die Plattform Endgeräte bzw. Clients, wobei bevorzugt ist, dass bei der Übermittlung der Suchanfrage - bzw. einiger der bzw. ausnahmslos aller Suchanfragen - die Recheneinheit zwischen einem die Suchanfrage versendenden Endgerät bzw. Client und der Datenbank geschaltet ist. Dies bewirkt die zentrale Zwischenschaltung der Recheneinheit und damit des Kodierungsgeheimnisses zwischen den Endgeräten/Clients und der besonders vertraulichen Datenbank. Hierdurch wird in der Folge der Schutz der Datenbank verstärkt, weil das Kodierungsgeheimnis zentral angeordnet ist und nicht etwa auf Endgeräten verfügbar ist.

Der Begriff "Gerät" meint vorzugsweise eine - bevorzugt bewegliche - Vorrichtung, mit deren Hilfe etwas bearbeitet, verarbeitet und/oder bewirkt wird.

Zur Lösung der eingangs genannten Aufgabe lehrt die Erfindung ein Computerprogramm zum Durchsuchen von vertraulichen Informationsobjekten, insbesondere zur Durchführung eines Verfahrens nach dem erfindungsgemäßen Verfahren, wobei das Computerprogramm ausgebildet ist, eine elektronische Plattform bereitzustellen, wobei die elektronische Plattform eine Recheneinheit und eine Datenbank umfasst, wobei die Nutzung der Plattform eine Zugangsberechtigung für Nutzer erfordert, wobei das Computerprogramm so ausgebildet ist, dass die Plattform Zugriff auf eine Vielzahl an Informationsobjekten besitzt bzw. den Nutzern ermöglicht, wobei das Computerprogramm so ausgebildet ist, dass eine Suchanfrage eines suchenden Nutzers an die Recheneinheit übermittelt wird und einen Suchvorgang in der Datenbank auslöst, wobei das Computerprogramm so ausgebildet ist, dass die Informationsobjekte Inhaltsdaten und Metadaten umfassen, dadurch gekennzeichnet, dass das Computerprogramm so ausgebildet ist, dass wenigstens ein Teil der und vorzugsweise alle Inhaltsdaten eines Informationsobjekts durch Text-, Bild-, Audio- und/oder Video-Einbettung von der Recheneinheit vektorisiert und als Vektor in der Datenbank gespeichert werden.

Die eingangs genannte Aufgabe wird gelöst durch eine Plattform zum Durchsuchen von vertraulichen Informationsobjekten, insbesondere zur Durchführung des erfindungsgemäßen Verfahrens, vorzugsweise umfassend das erfindungsgemäße Computerprogramm, wobei die elektronische Plattform eine Recheneinheit und eine Datenbank umfasst, wobei die Nutzung der Plattform eine Zugangsberechtigung für Nutzer erfordert, wobei die Plattform so ausgebildet ist, dass die Plattform Zugriff auf eine Vielzahl an Informationsobjekten besitzt bzw. den Nutzern ermöglicht, wobei die Plattform so ausgebildet ist, dass eine Suchanfrage eines suchenden Nutzers an die Recheneinheit übermittelt wird und einen Suchvorgang in der Datenbank auslöst, wobei die Plattform so ausgebildet ist, dass die Informationsobjekte Inhaltsdaten und Metadaten umfassen, dadurch gekennzeichnet, dass die Plattform so ausgebildet ist, dass wenigstens ein Teil der und vorzugsweise alle Inhaltsdaten eines Informationsobjekts durch Text-, Bild-, Audio- und/oder Video-Einbettung von der Recheneinheit vektorisiert und als Vektor in der Datenbank gespeichert werden.

Die eingangs genannte Aufgabe wird gelöst durch eine Verwendung des erfindungsgemäßen Computerprogramms bzw. der erfindungsgemäßen Plattform zum Durchsuchen von vertraulichen Informationsobjekten, insbesondere zur Durchführung des erfindungsgemäßen Verfahrens.

Der Ausdruck "Computerprogramm" meint in der Informatik vorzugsweise eine Darstellung eines Problemlösungsverfahrens in einer für einen Computer verständlichen Form. Programme werden zweckmäßigerweise in einer Programmiersprache formuliert. Vorteilhafterweise ist ein/das Computerprogramm (Programm) ein spezifischer Satz von geordneten Rechenoperationen, die ein Computer ausführen soll. Ein Computerprogramm kann somit als eine Folge von Befehlen gesehen werden, die nach Aufnahme in einem maschinenlesbaren Träger fähig sind zu bewirken, dass eine Maschine mit informationsverarbeitenden Tätigkeiten eine bestimmte Funktion oder Aufgabe ein bestimmtes Ergebnis anzeigt, ausführt oder erzielt. Software kann als Sammelbegriff für Programme und die zugehörigen Daten gesehen werden. Sie umfasst Anweisungen, die ein softwaregesteuertes Gerät ausführt und wie es diese ausführt. Die Hardware führt die Software aus und setzt somit die enthaltenen Anweisungen um.

Die Erfindung wird nachfolgend anhand eines Ausführungsbeispiels mithilfe von zwei Figuren veranschaulicht. Es zeigen
- Fig. 1: ein Blockdiagramm einer erfindungsgemäßen Plattform bei der Erstellung eines Informationsobjekts bzw. Vektors und
- Fig. 2: ein Blockdiagramm einer erfindungsgemäßen Plattform während der Durchführung einer Suche nach Informationsobjekten.

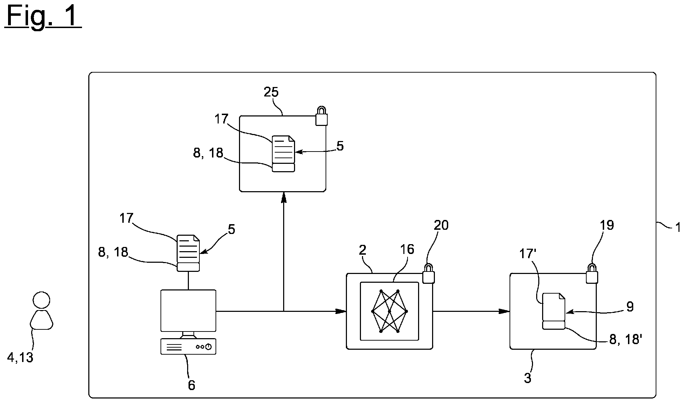

Eine erfindungsgemäße Plattform 1 zum Durchsuchen von vertraulichen Informationsobjekten 5 ist in Figur 1 abgebildet. Die Plattform 1 weist eine Recheneinheit 2 und eine Datenbank 3 auf. Zweckmäßigerweise umfasst die Plattform eine Mehrzahl an Endgeräten 6 bzw. auf den Endgeräten 6 installierte Clients, welche vorzugsweise von der Plattform 1 registriert sind. Bei der Plattform 1 handelt es sich beispielsweise um das Produkt SINA-Workflow der secunet Security Networks AG (secunet), welche zusätzlich mit dem erfindungsgemäßen Verfahren ausgestattet wird.

SINA Workflow bietet sichere digitale Räume zur Bearbeitung von Dokumenten und erleichtert die Kooperation in und zwischen Behörden/Unternehmen/Organisationen. Mit SINA Workflow wird die digitale und vorschriftenkonforme Bearbeitung und Verwaltung von hochsensiblen oder eingestuften Dokumenten erreicht. SINA Workflow bietet alle notwendigen Sicherheits- und Nachweisfunktionen auf Dokumentenebene. SINA Workflow verfügt über eine BSI-Zulassung bis GEHEIM und setzt das NTK-Prinzip umfassend und nachweisbar um. SINA Workflow ist eine auf die besonderen Anforderungen im Umgang mit vertraulichen Dokumenten zentrierte Lösung für Behörden und geheimschutzbetreute Industrie, die digitale Inhalte besonders gut schützen müssen. SINA Workflow ist ein durchgängiges digitales Dokumentenmanagementsystem für Verschlusssachen (VS) bis GEHEIM.

Die Plattform 1 dieses Ausführungsbeispiels wird von einer Behörde und insbesondere von einer Sicherheitsbehörde - beispielsweise von einer Polizeibehörde oder einem Geheimdienst - genutzt. Zweckmäßigerweise besitzt ein Teil der Mitarbeiter eine Zugangsberechtigung zur Plattform 1, sodass diese Mitarbeiter zugleich Nutzer 4 der Plattform 1 sind. Es ist besonders bevorzugt, dass die Plattform 1 dem NTK-Prinzip unterworfen ist.

Als Polizeibehörde bzw. Polizeiverwaltungsbehörde werden in den Bundesländern der Bundesrepublik Deutschland, deren Polizei nach dem Einheitssystem aufgebaut ist, Einrichtungen bevorzugt bezeichnet, welche Aufgaben der Gefahrenabwehr wahrnehmen, aber nicht zum Polizeivollzugsdienst gehören.

Die Plattform 1 ist mit Vorteil dazu ausgebildet, eine Vielzahl an Informationsobjekten 5 zu verwalten und insbesondere zu durchsuchen. Die Informationsobjekte 5 können Text-, Bild-, Audio- und/oder Videodateien sein. Die Informationsobjekte 5 werden vorzugsweise unterschiedlichen Sachverhalten, beispielsweise aktenartig geordneten Sachverhalten, zugeordnet.

Es ist möglich, dass einem Sachverhalt bzw. einem Vorgang bzw. einer Akte nur ein relativ kleiner Personenkreis bzw. Mitarbeiterkreis bzw. Kreis von Nutzern 4 zugeordnet ist, die dauerhaft bzw. nicht nur temporär oder situationsabhängig einen Zugriff auf das jeweilige Informationsobjekt 5 bzw. die Informationsobjekte 5 innerhalb eines Sachverhalts bzw. einer Akte besitzen. Dies wird vorzugsweise gemäß dem NTK-Prinzip gehandhabt. Alle anderen Personen bzw. Mitarbeiter bzw. Nutzer 4 außerhalb dieses relativ kleinen Kreises von Nutzern 4 ist von dem Informationsobjekt 5 bzw. den Informationsobjekten 5 dieses Sachverhalts bzw. dieses Vorgangs bzw. dieser Akte - jedenfalls zunächst - ausgeschlossen bzw. nicht zum Zugriff auf das Informationsobjekt 5 bzw. die Informationsobjekte 5 berechtigt.

Es ist bevorzugt, dass der Nutzer 4 aus Fig. 1 über ein ihm zugeordnetes, individuelles und zweckmäßigerweise geschütztes Nutzerkonto im Rahmen der Plattform 1 zur Nutzung der Plattform 1 verfügen kann. Das Nutzerkonto kann beispielsweise Passwort- und/oder biometrisch geschützt sein. Es ist möglich, dass der Nutzer 4 sich über ein Endgerät oder verschiedene Endgeräte 6 an der Plattform 1 - bei Angabe von wenigstens einem Identifikationsfaktor und vorzugsweise von wenigstens zwei Identifikationsfaktoren - in sein Nutzerkonto einloggen kann. Über das Nutzerkonto hat der Nutzer 4 vorzugsweise eine Zugriffsberechtigung auf alle jene Informationsobjekte 5, deren zugeordnete Sachverhalte bzw. Akten dem Nutzer 4 zugeordnet sind.

Insbesondere kann es sein, dass wenigstens ein Teil der Informationsobjekte 5, für die der Nutzer 4 eine Zugriffsberechtigung besitzt, als vertraulich eingestuft worden ist. Die Einstufung hinsichtlich der Vertraulichkeit entspricht vorzugsweise einer amtlichen Vorgehensweise und insbesondere einer deutschen Vorschrift bzw. Verordnung bzw. einem deutschen Gesetz bzw. einer Rechtsnorm. Ganz besonders bevorzugt unterliegt wenigstens eines der Informationsobjekte 5 einem amtlichen Geheimhaltungsgrad, beispielsweise "Verschlusssache - nur für den Dienstgebrauch", "Verschlusssache - vertraulich", "geheim" oder "streng geheim".

Zweckmäßigerweise besitzt der Nutzer 4 zu den ihm über die Sachverhalte bzw. Vorgänge bzw. Akten zugeordneten Informationsobjekten 5 eine ständige und vorzugsweise widerrufbare Zugriffsberechtigung. Die Zugriffsberechtigung kann beispielsweise widerrufen werden, wenn Sachverhalte bzw. Akten geschlossen werden oder der Nutzer 4 zu einer anderen Dienststelle wechselt, was für den Nutzer 4 häufig mit der Zuordnung von neuen Sachverhalten bzw. Vorgängen bzw. Akten und der Abgabe von alten Sachverhalten bzw. Vorgängen bzw. Akten einhergeht.

In Fig. 1 ist die Vorgehensweise innerhalb der Plattform 1 veranschaulicht, wenn ein Informationsobjekt 5 innerhalb der Plattform 1 erzeugt wird oder aber von außerhalb der Plattform 1 in die Plattform 1 eingefügt wird. Der Nutzer 4 erstellt beispielsweise ein Besprechungsprotokoll und damit ein Informationsobjekt 5 in Form eines Textdokuments. Das Textdokument - beispielsweise erstellt mithilfe eines Textverarbeitungsprogrammes - kann zum Beispiel im Word-Format aus der Erinnerung des Nutzers 4 am Endgerät 6 bzw. Client geschrieben werden, während der Nutzer 4 im Nutzerkonto angemeldet ist und dort beispielsweise die Option "neues Textdokument erstellen" ausgewählt hat.

Nach Fertigstellung des Textes wird dieses Dokument als Informationsobjekt 5 vorzugsweise in der Plattform 1 - insbesondere zentral in der Plattform 1 - gespeichert bzw. abgelegt. Mit Vorteil umfasst die Plattform 1 ein Speichersystem 25. Das Speichersystem 25 ist vorzugsweise zentral und/oder dateibasiert ausgebildet. Der Begriff "zentrales Speichersystem" meint vorzugsweise, dass wenigstens ein Teil der und bevorzugt alle der als vertraulich eingestuften Informationsobjekte 5 in dem zentralen Speichersystem 25 - vorzugsweise lediglich in dem zentralen Speichersystem 25 - gespeichert werden bzw. sind. Es ist möglich, dass alle der Informationsobjekte 5 in dem zentralen Speichersystem 25 - vorzugsweise lediglich in dem zentralen Speichersystem 25 - gespeichert werden bzw. sind. Es ist bevorzugt, dass das Speichersystem 25 bzw. Informationsobjekte 5 gegenüber anderen Komponenten der Plattform 1, beispielsweise gegenüber den Endgeräten 6 und/oder den Nutzerkonten, zusätzlich mithilfe eines Schutzmechanismus 26 geschützt ist/sind. Vorzugsweise ist das Informationsobjekt 5 bzw. sind die Informationsobjekte 5 in dem Speichersystem 25 (jeweils) verschlüsselt gespeichert. Es ist bevorzugt, dass die Plattform 1 das Informationsobjekt 5 bzw. die Informationsobjekte 5 in einem Speichervorgang zunächst auf einem/dem speicherbefehlgebenden Endgerät 6 verschlüsselt und dann in dem Speichersystem 25 verschlüsselt ablegt. Das Speichersystem 25 kann ein *Network Attached Storage* (NAS) sein.

Das gespeicherte Informationsobjekt 5 umfasst vorzugsweise Inhaltsdaten 17 und weiter vorzugsweise Metadaten 18. Während die Inhaltsdaten 17 dieses Ausführungsbeispiels lediglich den Text des Besprechungsprotokolls umfassen, weisen die Metadaten 18 beispielsweise das Erstellungsdatum und vorzugsweise die Erstellungsuhrzeit des gespeicherten Informationsobjekts 5 auf. Es ist bevorzugt, dass die Metadaten 18 Zuordnungsdaten zu einem Sachverhalt bzw. eine Akte - beispielsweise eine Aktennummer - aufweisen. Es ist möglich, dass die Metadaten 18 einen Objektidentifikator 8 umfassen, der das Informationsobjekt 5 identifiziert. Der Objektidentifikator 8 ist vorzugsweise ein *Universally Unique Identifier* (UUID). Im Ergebnis ist das Informationsobjekt 5 durch den Speichervorgang auf dem Speichersystem 25 gespeichert, durch den Objektidentifikator 8 in der Plattform 1 registriert und von der Plattform 1 bzw. einem Nutzer 4 grundsätzlich abrufbar.

Meldet sich der Nutzer 4 beispielsweise anderntags erneut am Nutzerkonto an, so kann er über das Nutzerkonto auf das gespeicherte Informationsobjekt 5 zugreifen und daran weiterarbeiten. Andere Nutzer 4, die ebenfalls dem Sachverhalt bzw. der Akte des gespeicherten Informationsobjekts 5 zugeordnet sind, können bevorzugt ebenso über ihr jeweiliges Nutzerkonto auf den Sachverhalt bzw. die Akte bzw. das gespeicherte Informationsobjekt 5 zugreifen. Diese Nutzer 4 sind - bezogen auf das beispielhafte Informationsobjekt 5 - zugleich auch zugriffsberechtigt und damit Zugriffberechtigte 13.

Dies gilt aber vorzugsweise - vorerst jedenfalls - nicht für weitere Nutzer 4, die nicht dem Sachverhalt bzw. der Akte des gespeicherten Informationsobjekts 5 zugeordnet sind, sodass die weiteren Nutzer 4 vorzugsweise weder Kenntnis besitzen von dem gespeicherten Informationsobjekt 5 noch von dem Sachverhalt bzw. der Akte noch von den mit dem Sachverhalt bzw. der Akte betrauten Zugriffsberechtigten 13. Dies ist ein direkter Ausfluss des NTK-Prinzips, welches allerdings zugleich große Teile des Wissens der Behörde - zunächst einmal - für weite Teile der Mitarbeiter der Behörde unzugänglich macht. Aus diesem Grunde wurde das erfindungsgemäße Verfahren zum Durchsuchen von vertraulichen Informationsobjekten geschaffen.

Der Begriff "Behörde" meint bevorzugt ein Beispiel bzw. Synonym für eine Organisation. Der Begriff "Organisation" steht vorzugsweise für ein über einen gewissen Zeitraum fest bestehendes, arbeitsteiliges System, in dem vorteilhafterweise Beteiligte und Maschinen bzw. Geräte bzw. Vorrichtungen zur Erfüllung der Organisationsaufgabe und zur Erreichung der Organisationsziele verbunden sind.

In einem ersten Schritt des erfindungsgemäßen Verfahrens greift daher die Plattform 1 auf das gespeicherte bzw. zu speichernde Informationsobjekt 5 zu und leitet es an die Recheneinheit 2 weiter, s. Figur 1. Die Recheneinheit 2 umfasst vorzugsweise eine künstliche Intelligenz 16, welche besonders bevorzugt als neuronales Netz und insbesondere als LLM ausgebildet ist. Die Recheneinheit 2 bzw. die künstliche Intelligenz 16 wandelt das beispielhafte Informationsobjekt 5 in Form des Textdokuments bzw. Besprechungsprotokolls durch Einbettung bzw. Worteinbettung in einen Vektor 9 um.

Der Vektor 9 ist zweckmäßigerweise mehrdimensional ausgebildet und umfasst bevorzugt in jeder Dimension einen bestimmten Wert. Die bestimmten Werte der Dimensionen können als Zahlenwerte und/oder Buchstabenwerte angegeben sein, um insbesondere eine semantische Suche zu ermöglichen. Der Vektor 9 wird vorzugsweise in der Datenbank 3 gespeichert. Es ist bevorzugt, dass der Vektor 9 des gespeicherten Informationsobjekts 5 vektorisierte Inhaltsdaten 17' und vorzugsweise vektorisierte Metadaten 18' umfasst. Mit Vorteil ist umfasst der Vektor 9 den Objektidentifikator 8, wobei der Objektidentifikator 8 des Vektors 9 vorzugsweise nicht vektorisiert ist.

Es ist sehr von Vorteil, wenn die Recheneinheit 2 und/oder die Datenbank 3 gegenüber weiteren Bereichen der Plattform 1 stärker geschützt sind. Mit Vorteil ist die Datenbank 3 durch einen Schutzmechanismus 19 - insbesondere gegenüber den Endgeräten 6 bzw. Nutzerkonten - zusätzlich geschützt. Es ist bevorzugt, dass die Recheneinheit 2 über einen Schutzmechanismus 20 - insbesondere gegenüber den Endgeräten 6 bzw. Nutzerkonten bzw. Clients - zusätzlich geschützt ist. Für den Schutzmechanismus 19 bzw. 20 kommen verschiedenste Maßnahmen bzw. kryptographische Maßnahmen, technische Maßnahmen, organisatorische Maßnahmen und/oder personelle Maßnahmen in Betracht. Eine personelle Maßnahme kann sein, dass nur ein Admin der Plattform 1 Zugriff auf die Recheneinheit 2 und/oder die Datenbank 3 besitzt.

Die Datenbank 3 ist besonders vorzugsweise als Vektordatenbank ausgebildet. Es ist sehr von Vorteil, dass die Nutzer 4 lediglich mittelbar über die Recheneinheit 2 einen Zugriff auf die Datenbank 3 bzw. Vektordatenbank bzw. die Vektoren 9 erhalten. Es ist bevorzugt, dass in der Datenbank 3 Vektoren 9 gespeichert sind bzw. gesammelt werden, die zweckmäßigerweise zu einer Vielzahl an Informationsobjekten 5 gehören. Insbesondere ist es von Vorteil, wenn in der Datenbank 3 Vektoren 9 gespeichert sind, die zu unterschiedlichen Nutzern 4 bzw. Sachverhalten bzw. Akten zugeordnet wurden. Dies erlaubt die situationsabhängige Zugriffsberechtigung im Rahmen des NTK-Prinzips.

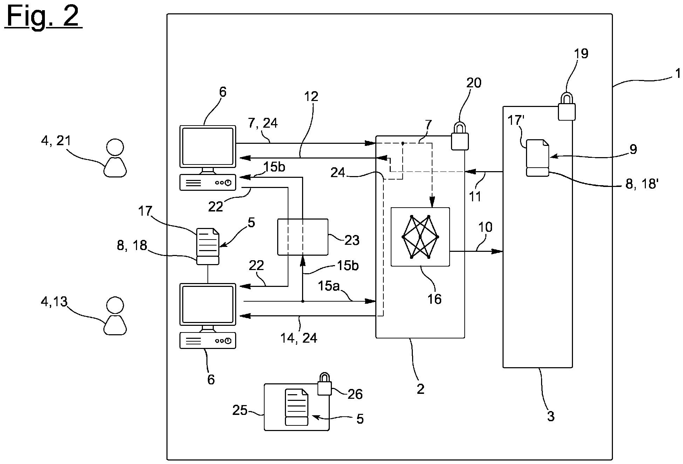

In Fig. 2 ist ein erfindungsgemäßes Verfahren zum Durchsuchen von vertraulichen Informationsobjekten 5 dargestellt, welches sich in der Plattform 1 gemäß Fig. 1 abspielt. Ein weiterer Nutzer 4 sucht Informationen bezüglich eines bestimmten, ihm zugeordneten Sachverhalts und ist damit zugleich ein suchender Nutzer 21. Der suchende Nutzer 4, 21 dieses Ausführungsbeispiels gehört einer anderen Dienststelle, jedoch derselben Behörde des Zugriffsberechtigten 4, 13 an und hat seinen Arbeitsplatz in einer anderen Stadt als der Zugriffsberechtigte 4, 13. Der Zugriffsberechtigte 4, 13 und der suchende Nutzer 4, 21 kennen sich daher nicht. Ebenso wenig ist dem suchenden Nutzer 4, 21 überhaupt das Tätigkeitsgebiet des Zugriffsberechtigten 4, 13 bekannt. Dies verdeutlicht, dass der suchende Nutzer 4, 21 auch über persönliche Kontakte in der Behörde kaum eine Chance hat, an die von ihm gesuchten Informationen zu gelangen. Die gesuchten Informationen dieses Ausführungsbeispiels befinden sich in dem beispielhaften Informationsobjekt 5 des Zugriffsberechtigten 13 in dem Speichersystem 25.

Der suchende Nutzer 21 ist im Rahmen seines Sachverhalts bzw. Akte mit der Frage beschäftigt, ob zu einer bestimmten Person Informationen innerhalb der Behörde bzw. der Plattform 1 gespeichert sind. Hierzu erstellt der suchende Nutzer 4, 21 zweckmäßigerweise eine Suchanfrage 7, welche bevorzugt von einem Endgerät 6 bzw. Client des suchenden Nutzers 21 an die Recheneinheit 2 übermittelt wird. Die Suchanfrage 7 kann insbesondere als Fragesatz formuliert sein. Beispielsweise ist die Suchanfrage 7 wie folgt formuliert: "Welche Informationen sind zu Person X seit dem 01.01.2010 im Zusammenhang mit Fußballspielen bekannt?". Ebenso kann die Suchanfrage als exakte Wortsuche ausgestaltet sein und beispielsweise die Begriffe "Fußball" und "[bestimmter Nachname]" boolesch miteinander schneiden.

Mit Vorteil nimmt die Recheneinheit 2 eine - insbesondere sprachliche bzw. zeichenkorrigierende - Vorverarbeitung der Suchanfrage 7 vor, bei welcher zum Beispiel überflüssige Satzzeichen, Leerzeichen und/oder Sonderzeichen entfernt werden. Es ist sehr bevorzugt, dass die Recheneinheit 2 bzw. die künstliche Intelligenz 16 die Suchanfrage 7 vektorisiert bzw. in einen Anfragevektor 10 umwandelt. Zweckmäßigerweise wird der Anfragevektor 10 von der Recheneinheit 2 bzw. der künstlichen Intelligenz 16 analog zu den Vektoren 9 der Informationsobjekte 5 erzeugt. Es ist von Vorteil, dass die Recheneinheit 2 bzw. die Datenbank 3 den Anfragevektor 10 mit den in der Datenbank 3 gespeicherten Vektoren abgleicht und ein Ähnlichkeitsmaß bestimmt. Auf Grundlage des mit dem Anfragevektor 10 durchgeführten Abgleichs macht die Plattform 1 bzw. die Recheneinheit 2 bzw. die Datenbank 3 beispielsweise zehn Vektoren 9 als relevante Treffer ausfindig. Es von Vorteil, dass die Plattform 1 bzw. die Recheneinheit 2 bzw. die Datenbank 3 diese relevanten Treffer zu einer Treffermenge 11 gruppiert.

Die Recheneinheit 2 bzw. die Plattform 1 gleicht vorzugsweise die Zugriffsberechtigung des suchenden Nutzers 21 mit den aufgefundenen Vektoren 9 bzw. den zugeordneten Informationsobjekten 5 der Treffermenge ab. Dabei kann der Recheneinheit 2 bzw. der Plattform 1 auffallen, dass der suchende Nutzer 4, 21 zu mehreren Treffern der Treffermenge 11 keine dauerhafte Zugriffsberechtigung besitzt. Es ist bevorzugt, dass die Recheneinheit 2 bzw. die Plattform 1 dem suchenden Nutzer 4, 21 jedenfalls diejenigen Informationsobjekte 5 der Treffermenge 11 sofort zur Verfügung stellt, für die der suchende Nutzer 21 bereits eine, insbesondere dauerhafte, Zugriffsberechtigung besitzt.

Mit Vorteil übermittelt die Recheneinheit 2 bzw. die Plattform 1 dem suchenden Nutzer 4, 21 eine Ergebnismenge 12, welche in diesem Ausführungsbeispiel weniger Treffer als die Treffermenge 11 umfasst. Die Ergebnismenge 12 kann als Liste ausgebildet sein und ist vorzugsweise nach Relevanz der Treffer sortiert. Vorteilhafterweise wird dem suchenden Nutzer 4, 21 gleichzeitig mit der Ergebnismenge 12 mitgeteilt, ob neben den Treffern der Ergebnismenge 12 auch noch ein Treffer oder weitere Treffer ermittelt wurden, für die derzeit NTK-Prüfungen laufen.

In diesem Ausführungsbeispiel findet eine der NTK-Prüfungen durch den Zugriffsberechtigten 4, 13 statt, s. Figur 2. Der Zugriffsberechtigte 4, 13 erhält gemäß diesem Ausführungsbeispiel eine Prüfungsmitteilung 14 von der Recheneinheit 2 bzw. Plattform 1, wonach von ihm zu prüfen ist, ob der suchende Nutzer 21 eine situationsabhängige Zugriffsberechtigung auf das beispielhafte Informationsobjekt 5 - das Besprechungsprotokoll - erhalten soll.

Es ist möglich, dass die Plattform 1 bzw. die Recheneinheit 2 dem Zugriffsberechtigten 4, 13 automatisiert Eckdaten 24 des suchenden Nutzers 4, 21 übermittelt. Diese Eckdaten 24 können eine bestimmte Deliktart (zum Beispiel "Mord/Totschlag") und/oder die Bezeichnung der Dienststelle des suchenden Nutzers 4, 21 sein (beispielsweise Landeskriminalamt, Dienstelle Stadt XY). Es ist von Vorteil, dass die Eckdaten 24 zunächst von dem Endgerät 6 an die Recheneinheit 2 gesendet werden. Vorzugsweise übermittelt die Plattform 1 bzw. die Recheneinheit 2 dem Zugriffsberechtigten 4, 13 bzw. dem Endgerät 6 bzw. Client des Zugriffsberechtigten 4, 13 - bevorzugt gleichzeitig mit der Prüfungsmitteilung 14 - die Eckdaten 24.

Möglicherweise kann der Zugriffsberechtigte 4, 13 bereits aus diesen Eckdaten 24 erkennen, ob dem suchenden Nutzer 4, 21 eine situationsabhängige Zugriffsberechtigung zusteht. Bejahendenfalls würde der Zugriffsberechtigte 4, 13 eine Zugriffsentscheidung 15a in Form einer Freigabe, zweckmäßigerweise an die Plattform 1 bzw. Recheneinheit 2, versenden. In der Folge erhält der suchende Nutzer 4, 21 einen wenigstens temporären Zugriff und zweckmäßigerweise einen dauerhaften Zugriff auf das gesuchte Informationsobjekt 5 in dem Speichersystem 25.

Die Plattform 1 umfasst bevorzugt eine Kommunikationseinheit 23, welche beispielsweise Posteingänge und/oder Postausgänge innerhalb von Nutzerkonten verwalten kann. Es kann sein, dass der Zugriffsberechtigte 4, 13 aus den Eckdaten 24 heraus noch nicht ableiten kann, ob dem suchenden Nutzer 4, 21 eine situationsabhängige Zugriffsberechtigung zusteht. Mit Vorteil kann der Zugriffsberechtigte 4, 13 bevorzugt über die Kommunikationseinheit 23 eine - vorteilhafterweise anonymisierte - Rückfrage 15b auf die Prüfungsmitteilung 14 an den - vorzugsweise anonymisierten - suchenden Nutzer 4, 21 versenden, welche eine Bitte einer kurzen Sachverhaltsdarstellung enthalten kann. Es ist möglich, dass der Zugriffsberechtigte 4, 13 in der Rückfrage 15b an den suchenden Nutzer 4, 21 darauf hinweist, auf was es innerhalb der Sachverhaltsdarstellung ankommt.

Vorzugsweise antwortet der suchende Nutzer 4, 21 auf die Rückfrage 15b mit einer, bevorzugt anonymisierten, Sachverhaltsdarstellung 22. Es kann sein, dass der Zugriffsberechtigte 4, 13 anhand der Sachverhaltsdarstellung 22 dann erkennen kann, dass dem suchenden Nutzer 21 eine situationsabhängige Zugriffsberechtigung auf das Informationsobjekt 5 zusteht. In der Folge würde der Zugriffberechtigte 4, 13 eine entsprechende Zugriffsentscheidung 15a treffen und die Plattform 1 bzw. die Recheneinheit 2 den Zugriff auf das Informationsobjekt 5 dem suchenden Nutzer 4, 21 gewähren oder verweigern.

Es ist besonders bevorzugt, dass die Plattform 1 mehreren Nutzern 4 bzw. allen Nutzern 4 einen Nutzeridentifikator zuordnet. Mit Vorteil ist jeder Nutzeridentifikator einem bzw. lediglich einem Nutzer 4 bzw. Nutzerkonto zugeordnet. Der Nutzeridentifikator ermöglicht es der Plattform 1 vorzugsweise, die Zugriffsberechtigung des suchenden Nutzers 4, 21 auf die Informationsobjekte 5 festzustellen. Mit Vorteil baut die Plattform 1 eine Kommunikation zwischen dem suchenden Nutzer 4, 21 und dem Zugriffsberechtigten 4, 13 mithilfe der beiden Nutzeridentifikatoren auf.

### Bezugszeichenliste

- 1: Plattform
- 2: Recheneinheit
- 3: Datenbank
- 4: Nutzer
- 5: Informationsobjekt
- 6: Endgerät von 4
- 7: Suchanfrage
- 8: Objektidentifikator
- 9: Vektor
- 10: Anfragevektor
- 11: Treffermenge
- 12: Ergebnismenge
- 13: Zugriffsberechtigter und Nutzer 4
- 14: Prüfungsmitteilung
- 15a: Zugriffsentscheidung
- 15b: Rückfrage zur Prüfung
- 16: Künstliche Intelligenz von 2
- 17: Inhaltsdaten von 5
- 17': Inhaltsdaten von 9
- 18: Metadaten von 5
- 18': Metadaten von 9
- 19: Schutzmechanismus von 3
- 20: Schutzmechanismus von 2
- 21: Suchender Nutzer 4
- 22: Sachverhaltsdarstellung
- 23: Kommunikationseinheit
- 24: Eckdaten
- 25: Speichersystem für 5
- 26: Schutzmechanismus von 25

## Patentansprüche

1. Verfahren zum Durchsuchen von vertraulichen Informationsobjekten (5), wobei eine elektronische Plattform (1) eine Recheneinheit (2) und eine Datenbank (3) umfasst, wobei die Nutzung der Plattform (1) eine Zugangsberechtigung für Nutzer (4) erfordert, wobei die Plattform (1) Zugriff auf eine Vielzahl an Informationsobjekten (5) besitzt bzw. den Nutzern (4) ermöglicht, wobei eine Suchanfrage (7) eines suchenden Nutzers (4, 21) an die Recheneinheit (2) übermittelt wird und einen Suchvorgang in der Datenbank (3) auslöst, wobei die Informationsobjekte (5) Inhaltsdaten (17) und Metadaten (18) umfassen,
**dadurch gekennzeichnet, dass**
wenigstens ein Teil der und vorzugsweise alle Inhaltsdaten (17) eines Informationsobjekts (5) durch Text-, Bild-, Audio- und/oder Video-Einbettung von der Recheneinheit (2) vektorisiert und als Vektor (9) in der Datenbank (3) gespeichert werden.

2. Verfahren nach Anspruch 1, wobei die Plattform (1) bzw. die Recheneinheit (2) die Suchanfrage (7) des Nutzers vektorisiert und in einen Anfragevektor (10) umwandelt, wobei bevorzugt ist, dass der Anfragevektor (10) mit dem Vektor (9) aus der Datenbank (3) abgeglichen wird.

3. Verfahren nach Anspruch 1 oder 2, wobei der Vektor (9) und das Informationsobjekt (5) mithilfe eines Objektidentifikators (8) einander zugeordnet bzw. mit einander verknüpft werden, wobei der Objektidentifikator (8) vorzugsweise ein *Universally Unique Identifier* (UUID) ist.

4. Verfahren nach einem der Ansprüche 1 bis 3, wobei dem Informationsobjekt (5) mehrere Vektoren (9) zugeordnet sind, wobei bevorzugt ist, dass das Informationsobjekt (5) bzw. eine Kopie des Informationsobjekts (5) in mehrere Teile zerlegt wird, wobei vorzugsweise wenigstens zwei der Teile vektorisiert bzw. in einen Vektor (9) umgewandelt werden.

5. Verfahren nach einem der Ansprüche 1 bis 4, wobei die Recheneinheit (2) bzw. die Plattform (1) bzw. die Datenbank (3) eine auf der Suchanfrage (7) beruhende Treffermenge (11) von Treffern erstellt, wobei zweckmäßigerweise der oder die Treffer ein aufgefundener Vektor (9) bzw. aufgefundene Vektoren (9) bzw. ein zu dem (jeweiligen) aufgefunden Vektor (9) gehörendes Informationsobjekt (5) gemäß der Suchanfrage (7) ist/sind, wobei die Plattform (1) bzw. die Recheneinheit (2) vorzugsweise die Treffermenge (11) mit einer Zugriffsberechtigung des suchenden Nutzers (4, 21) abgleicht.

6. Verfahren nach einem der Ansprüche 1 bis 5, wobei nach der Speicherung des zu dem wenigstens einen Informationsobjekt (5) gehörenden Vektors (9) neben dem gespeicherten Vektor (9) auch das Informationsobjekt (5) wenigstens zeitweise parallel gespeichert ist, wobei das Informationsobjekt (5) vorzugsweise in einem Speichersystem (25) gespeichert ist, wobei vorzugsweise das Speichersystem (25) ein anderes Gerät als die Datenbank (3) ist, auf welcher der zu dem Informationsobjekt (5) zugehörige Vektor (9) gespeichert ist.

7. Verfahren nach einem der Ansprüche 1 bis 6, wobei die Plattform (1) Endgeräte (6) bzw. Clients umfasst, wobei bevorzugt ist, dass bei der Übermittlung Falle der Suchanfrage (7) die Recheneinheit (2) zwischen einem die Suchanfrage (7) versendenden Endgerät (6) bzw. Client und der Datenbank (3) geschaltet ist.

8. Computerprogramm zum Durchsuchen von vertraulichen Informationsobjekten, insbesondere zur Durchführung eines Verfahrens nach einem der Ansprüche 1 bis 7, wobei das Computerprogramm ausgebildet ist, eine elektronische Plattform (1) bereitzustellen, wobei die elektronische Plattform (1) eine Recheneinheit (2) und eine Datenbank (3) umfasst, wobei die Nutzung der Plattform (1) eine Zugangsberechtigung für Nutzer (4) erfordert, wobei das Computerprogramm so ausgebildet ist, dass die Plattform (1) Zugriff auf eine Vielzahl an Informationsobjekten (5) besitzt bzw. den Nutzern (4) ermöglicht, wobei das Computerprogramm so ausgebildet ist, dass eine Suchanfrage (7) eines suchenden Nutzers (4, 21) an die Recheneinheit (2) übermittelt wird und einen Suchvorgang in der Datenbank (3) auslöst, wobei das Computerprogramm so ausgebildet ist, dass die Informationsobjekte (5) Inhaltsdaten (17) und Metadaten (18) umfassen,
**dadurch gekennzeichnet, dass**
das Computerprogramm so ausgebildet ist, dass wenigstens ein Teil der und vorzugsweise alle Inhaltsdaten (17) eines Informationsobjekts (5) durch Text-, Bild-, Audio- und/oder Video-Einbettung von der Recheneinheit (2) vektorisiert und als Vektor (9) in der Datenbank (3) gespeichert werden.

9. Plattform (1) zum Durchsuchen von vertraulichen Informationsobjekten, insbesondere zur Durchführung eines Verfahrens nach einem der Ansprüche 1 bis 7, vorzugsweise umfassend ein Computerprogramm nach Anspruch 8, wobei die elektronische Plattform (1) eine Recheneinheit (2) und eine Datenbank (3) umfasst, wobei die Nutzung der Plattform (1) eine Zugangsberechtigung für Nutzer (4) erfordert, wobei die Plattform (1) so ausgebildet ist, dass die Plattform (1) Zugriff auf eine Vielzahl an Informationsobjekten (5) besitzt bzw. den Nutzern (4) ermöglicht, wobei die Plattform so ausgebildet ist, dass eine Suchanfrage (7) eines suchenden Nutzers (4, 21) an die Recheneinheit (2) übermittelt wird und einen Suchvorgang in der Datenbank (3) auslöst, wobei die Plattform (1) so ausgebildet ist, dass die Informationsobjekte (5) Inhaltsdaten (17) und Metadaten (18) umfassen,
**dadurch gekennzeichnet, dass**
die Plattform (1) so ausgebildet ist, dass wenigstens ein Teil der und vorzugsweise alle Inhaltsdaten (17) eines Informationsobjekts (5) durch Text-, Bild-, Audio- und/oder Video-Einbettung von der Recheneinheit (2) vektorisiert und als Vektor (9) in der Datenbank (3) gespeichert werden.

10. Verwendung eines Computerprogramms nach Anspruch 8 bzw. einer Plattform nach Anspruch 9 zum Durchsuchen von vertraulichen Informationsobjekten, insbesondere zur Durchführung eines Verfahrens nach einem der Ansprüche 1 bis 7.
